# EUROPEAN PATENT APPLICATION

(11) **EP 1 477 260 A1**
(43) Date of publication of application: **17.11.2004**
(21) Application number: 04252770.5
(22) Date of filing: 13.05.2004
(51) Int. Cl.: B23K 11/24, B23K 11/31

(54) **Pinch weld gun with curvilinear shunt**

(30) Priority: 13.05.2003 US 437310
(71) Applicant: Progressive Tool & Industries Company, Southfield, MI 48034 (US)
(72) Inventor: Angel, Jeffrey R, Lake Orion, Michigan 48362 (US)
(74) Representative: Church, Simon John

(57) **Abstract**

A pinch type weld gun (10) wherein a shunt (30,28) is fixedly secured at one end thereof to a gun electrode (70,83) and fixedly secured at another end thereof to the gun transformer (12). The shunt (30,28) is formed of a plurality of elongated strips of flexible copper material which are arranged in stacked configuration whereafter the end portions of the stack are electrically welded to fuse the end portions together to form rigid unified end portions. The strips are unsecured intermediate the unified end portions to form a flexible intermediate portion and the unified end portion connected to the transformer is bent into a curvilinear configuration to provide a compact and relaxed routing for the shunt (30,28) between the transformer (12) and the electrode (70,83).

## Description

This invention relates to weld guns and more particularly to weld guns especially suitable for use in industrial automotive applications.

Weld guns are common usage in many industrial applications and in particular in automotive applications. Where a myriad of weld gun designs have been proposed and/or utilized commercially, there is still a need for a simpler weld gun design, providing a less expensive cost of assembly; for a weld gun design that is easier to service, thereby reducing servicing costs; and for a weld gun design that provides a longer life, thereby reducing replacement costs.

This invention is directed to the provision of an improved weld gun.

More specifically, this invention is directed to the provision of a weld gun design that is simple, inexpensive and durable.

According to a first aspect of the invention, there is provided a weld gun including a frame structure, a weld arm mounted on the frame structure, an electrode mounted on the weld arm and including an electrode cap at one end of the electrode, a transformer, and a shunt secured at opposite ends thereof to another end of the electrode and to the transformer, characterized in that: the shunt is formed of a plurality of stacked, elongated flexible strips of an electrically conductive material; the strips are fixedly secured at their opposite end portions to form unified shunt end portions but are unsecured intermediate the unified end portions to form a flexible intermediate portion between the unified shunt end portions; at least one of the unified end portions of the shunt is bent into a curvilinear configuration; and the flexible intermediate portion extends in curvilinear fashion between the unified end portions.

This arrangement, wherein one of the unified end portions of the shunt assumes a curvilinear configuration, facilitates the provision of a compact and yet relaxed package configuration for the shunt as it extends between the transformer and the electrode.

According to a further feature of the invention, the bent unified end portion is secured to the transformer. This specific construction further facilitates the compact and yet relaxed packaging and routing of the shunt.

According to a further feature of the invention, the bent unified end portion, the flexible intermediate portion, and the other unified end portion coact to define an "S" configuration. This specific arrangement maximizes the compact and yet relaxed packaging and routing of the shunt

According to a further feature of the invention, the intermediate shunt portion presents a "U" configuration between the unified end portions.

According to a further feature of the invention, the shunt further includes a clip positioned over each unified end portion of the shunt prior to the bending operation, and strips of insulative material positioned loosely above and below the intermediate portion in sandwich fashion and crimped at outboard ends thereof beneath inboard ends of the clips. This arrangement provides a convenient and effective means providing an insulative cover for the conductive strips.

According to a further feature of the invention, the formation of the unified end portions is performed as an electric welding operation serving to fuse the end portions of the stacked conductive strips together. This selective fusion step provides a ready and convenient means of forming the unified end portions.

According to a further feature of the invention, each of the unified end portions includes aperture means to facilitate securement of the shunt to the electrode and the transformer, respectively, and the unified end portion for securement to the transformer further includes a coolant passage for communication with a coolant passage system in the transformer to allow the delivery of a cooling fluid into the transformer coolant passage system through the unified end portion.

According to a further feature of the invention, the weld arm comprises a first weld arm; the electrode comprises a first electrode; the shunt comprises a first shunt; the weld gun further includes a second weld arm mounted on the frame structure, a second electrode mounted on the second weld arm and including an electrode cap at one end of the second electrode, and a second shunt secured at one end thereof to another end of the second electrode and secured at another end thereof to the transformer; the second shunt is formed of a plurality of stacked elongated strips of electrically conductive material; the strips of the second shunt are fixedly secured together at their opposite end portions to form rigid unified end portions but are unsecured intermediate the unified end portions to form a flexible intermediate portion between the unified end portions; and one unified end portion of the second shunt is fixedly secured to the other end of the second electrode, the other unified end portion of the second shunt is fixedly secured to the transformer, and the flexible intermediate portion of the second shunt extends in curvilinear fashion between the unified end portions of the second shunt.

According to a further feature of the invention, the bent unified end portion of the first shunt is secured to the transformer.

According to a further feature of the invention, the bent unified end portion ofthe first shunt, the flexible intermediate portion of the first shunt, and the other unified end portion of the first shunt coact to define an "S" configuration.
According to a further feature of the invention, the first shunt presents an "S" configuration; and the intermediate portion of the second shunt presents a "U" configuration between the unified end portions.
According to a second aspect of the invention, there is provided a shunt for use with a weld gun including a frame structure, a weld arm mounted on the frame structure, an electrode mounted on the weld arm and including an electrode cap at one end of the electrode, a transformer, and a shunt secured at one end thereof to another end of the electrode and secured at another end thereof to the transformer, characterized in that:
the shunt is formed of a plurality of stacked elongated flexible strips of an electrically conductive material, the strips are fixedly secured at their opposite end portions to form rigid unified shunt end portions but are unsecured intermediate the unified end portions to form a flexible intermediate portion between the unified shunt end portions; and
one of the unified end portions is bent into a curvilinear configuration whereby one unified end portion of the shunt may be fixedly secured to the other electrode end, the other unified end portion of the shunt may be fixedly secured to the transformer, and the flexible intermediate portion may extend in curvilinear fashion between the unified end portions.
According to a third aspect of the invention, there are provided first and second shunts for use with a weld gun including a frame structure, first and second electrodes mounted on the frame structure and each including an electrode end cap at one end of the electrode, a transformer, a first shunt secured at one end thereof to another end of the first electrode and secured at another end thereof to the transformer and a second shunt secured at one end thereof to another end of the second electrode and secured at another end thereof to the transformer, characterized in that:
each shunt is formed of a plurality of stacked elongated flexible strips of an electrically conductive material;
the strips of each shunt are fixedly secured at their opposite end portions to form rigid, unified, shunt end portions but are unsecured intermediate the unified end portions to form a flexible intermediate portion between the unified shunt end portions; and
one unified end portion of one of the shunts is bent into a curvilinear configuration.

According to a fourth aspect of the invention there is provided a method of forming a shunt for use with a weld gun, including an electrode and a transformer, the shunt adapted to extend between the electrode and the electrode and the transformer, the method comprising;
positioning a plurality of flexible strips of an electrically conductive material in a stacked configuration;
fixedly securing the opposite end portions of the strips together to form unified shunt end portions while maintaining the strips intermediate the unified end portions in an unsecured relation to form a flexible intermediate portion between the unified shunt end portions; and
bending at least one of the unified end portions into a curvilinear configuration.

Several embodiments of the invention will now be described, by way of example only, with reference to the accompanying drawings wherein like reference numerals refer to like parts throughout the several views, and wherein:
Figure 1 is a perspective view of a weld gun according to the invention;
Figure 1 A is a perspective view of a coolant distributor assembly for the weld gun;
Figure 2 is a side elevational view of the weld gun;
Figure 3 is an end view of the weld gun;
Figure 4 is a cross-sectional view taken on line 4-4 of Figure 2;
Figure 5 is a perspective view of the basic skeletal structure of the weld gun;
Figures 6, 7 and 8 are elevational, end, and perspective views of a first shunt utilized in the weld gun;
Figure 6A is a detail view taken within the circle 6A of Figure 6;
Figures 9, 10, 11 and 12 are elevational, front end, rear end, and perspective views of a second shunt utilized in the weld gun;
Figures 13-16 are detail views of component parts of the weld gun;
Figure 17 is a fragmentary cross-sectional view taken within the circle 17 of Figure 3;
Figure 18 is a detail view showing a transformer/shunt interface of the weld gun; and
Figure 19 is a cross-sectional view of a portion of the coolant distributor assembly seen in Figure 1 A.

The weld gun 10 of the invention, broadly considered, includes, a transformer 12, a cage or cradle assembly 14, an outer weld arm assembly 16, an inner weld arm 18, an upper electrode assembly 20, a lower electrode assembly 22, a power cylinder assembly 24, a balancing cylinder assembly 26, an upper shunt 28, a lower shunt 30, and a coolant distributor assembly 31.

Transformer 12 (Figures, 1, 2 and 18) is of known form and has a monolithic rectangular configuration including a top face 12a, side faces 12b, a rear end 12c, and a front face 12d. Transformer 12 in known manner includes a coolant passage system 13 to facilitate the delivery of coolant to the transformer.

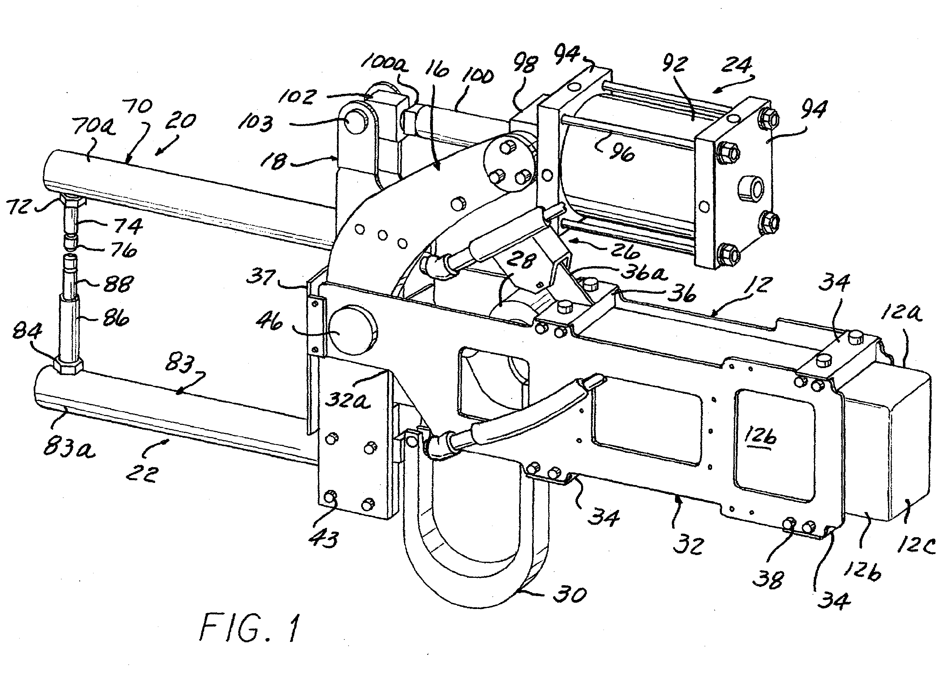

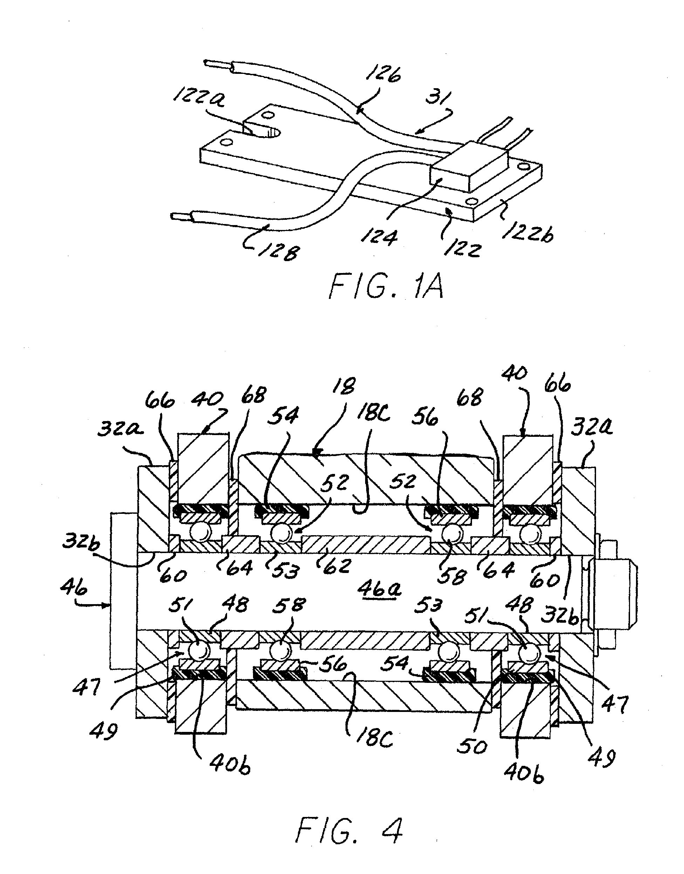

Cage or cradle 14 (Figures 1, 2 and 5) is arranged to straddle the transformer and includes side plates 32, cross bars 34 and 36, and a front shield 37. Cage 14 fits around the transformer with forward bracket arm portions 32a of the side plates extending forwardly beyond the front face 12d of the transformer. Shield 37 is fixedly secured to and extends between the front ends of bracket portions 32a. Bolts 38 fixedly secure cross-bars 34, 36 to side plates 32 and set screws 39 fixedly mount the cage on the transformer.

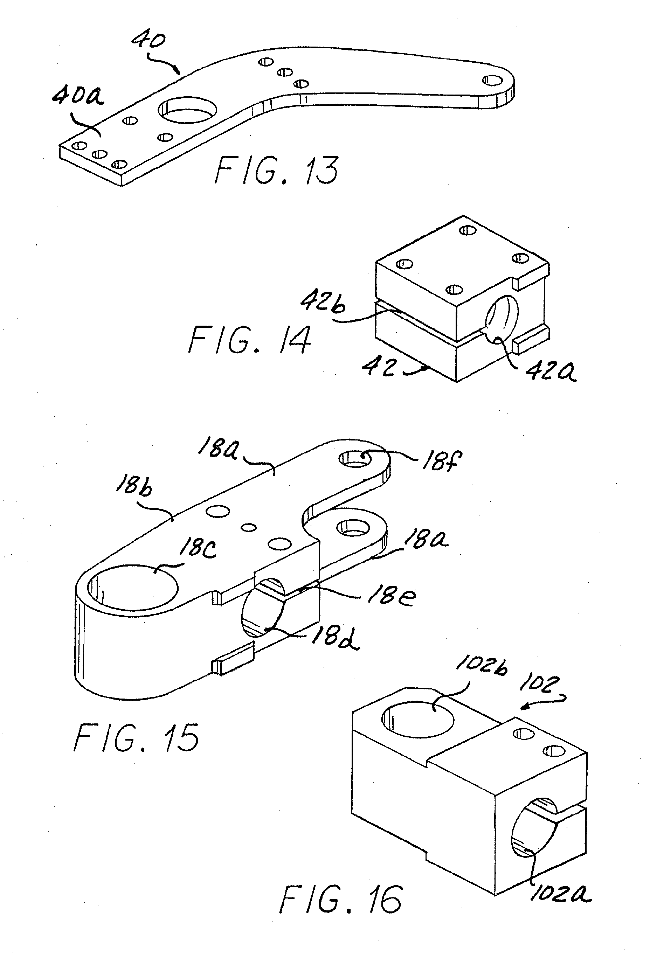

Outer weld assembly 16 (Figures 1, 2, 5, 13 and 14) includes a pair of spaced arcuate side arms 40 and a holder block 42 fixedly positioned between the lower ends 40a of the side arms 40 via bolts 43. A pair of spacer plates 44 are positioned between the opposite faces of block 42 and the respective confronting inner faces of side arm lower end portions 40a.

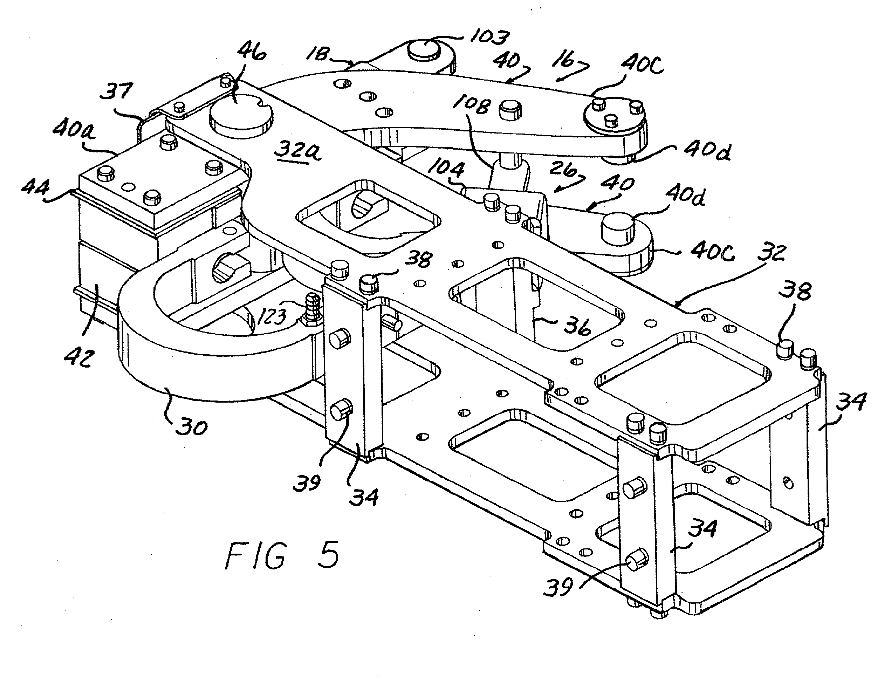

Side arms 40 are pivotally secured to the bracket arm portions 32a of the side plates of the cage via a clevis or pivot pin 46 passing through aligned apertures 32b (Figure 4) in bracket arm portions 32a and through apertures 40b in the respective side plates. A ball bearing assembly 47 is positioned between each aperture 40b and the main body portion of 46a of the clevis pin 46. Each bearing assembly 47 includes an inner race 48 fixedly secured to pivot pin main body portion 46a, an annular dielectic member 49 (formed of a suitable insulative material such as nylon) fixedly positioned within the respective aperture 40b and having an inwardly facing cup shaped configuration in cross-section; an outer race 50 fixedly secured within the annular cup defined by annular member 49, and a ball run 51 rollably positioned between inner and outer races 48 and 50.

Inner weld arm 18 (Figures 1, 2, 5 and 15) has a clevised upper configuration defined by spaced arm portions 18a and a monolithic lower main body portion 18b defining a lower cross bore 18c receiving pivot pin 46. The lower end 18b of arm 18 is pivoted on pivot pin 46 via spaced ball bearing assemblies 52 (Figure 4) each including an inner race 53 fixedly secured to a respective portion of pivot pin main body portion 46a, an outer annular insulative member 54 fixedly positioned within bore 18c and having an inwardly facing cup shaped cross-sectional configuration, an outer race 56 fixedly positioned within the annular cup defined by annular member 54, and a ball race 58 rollably positioned between the inner and outer races.

An annular spacer 60 is positioned between the inner face of each bracket side arm portion 32a and the inner race of a respective bearing assembly 47; an annular spacer 62 is positioned between the inner races 53 of the respective bearing assemblies 50; and annular spacers 64 are positioned between the inner race of each bearing assembly 47 and the inner race of the respective bearing assembly 52. Insulative annular shims 66 are positioned between the inner faces of bracket arm portions 32a and the respective side arms 40 and further insulative annular shims 68 are positioned between the inner face of each side arm 40 and a respective outer face of inner arm 18. Bearings 47 and 52, in coaction with spacers 60, 62 and 64 and shims 66 and 68 will be seen to provide a robust journaling of the outer arms 40 and the inner arm 18 on the pivot pin 46 while providing effective electrical insulation between the arms and the cage structure.

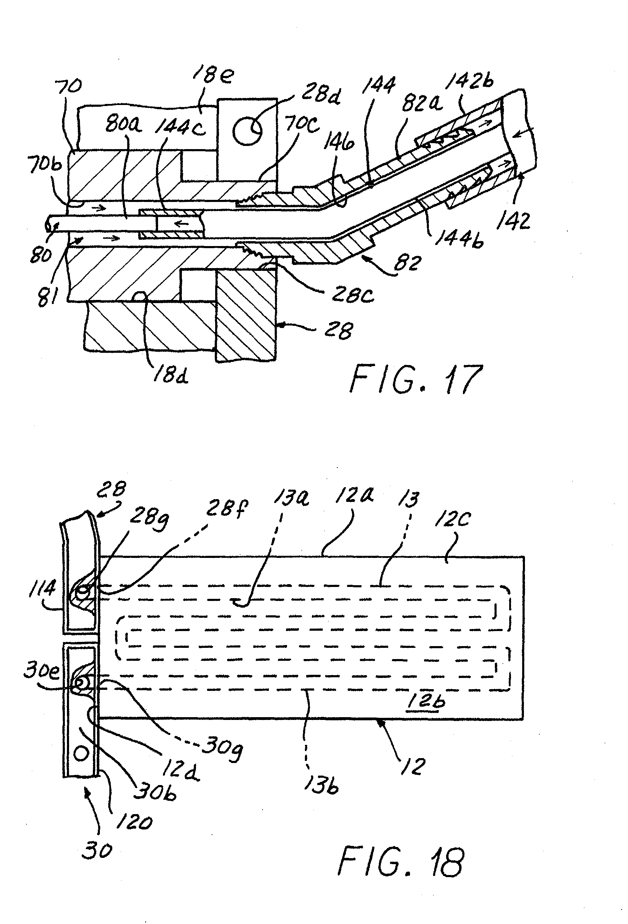

Upper electrode assembly 20 (Figures 1, 2 and 17) includes an electrode 70, a hex adapter 72 secured to the free front end 70a of the electrode, a cap adapter 74 connected to hex adapter 72, an electrode cap or weld tip 76 connected to cap adapter 74, and a central coolant tube 80 positioned concentrically in a central axial passage 70b in electrode 70. Coolant tube 80 coacts with passage 70b to define concentric axially extending coolant fluid passages including a central inner passage defined within tube 80 and an annular outer passage 81 defined between passage 70b and tube 80. It will be understood that, in known manner, the concentric coolant fluid passages extend through hex adapter 72, and cap adapter 74 whereby to deliver coolant fluid to weld tip 76 and return coolant fluid from the tip. For example, coolant fluid may be delivered via inner tube 80 and return flow may be provided via annular outer passage 81.

The rear end 70c of electrode 70 is clampingly received in a bore 18d defined in arm 18 with clamping accomplished via a split 18e in the arm coacting with suitable fasteners passing through and interconnecting the sides of the arm on opposite sides of the split. An angled fitting 82 is threadably received in a reduced diameter rear portion 70c of electrode 70.

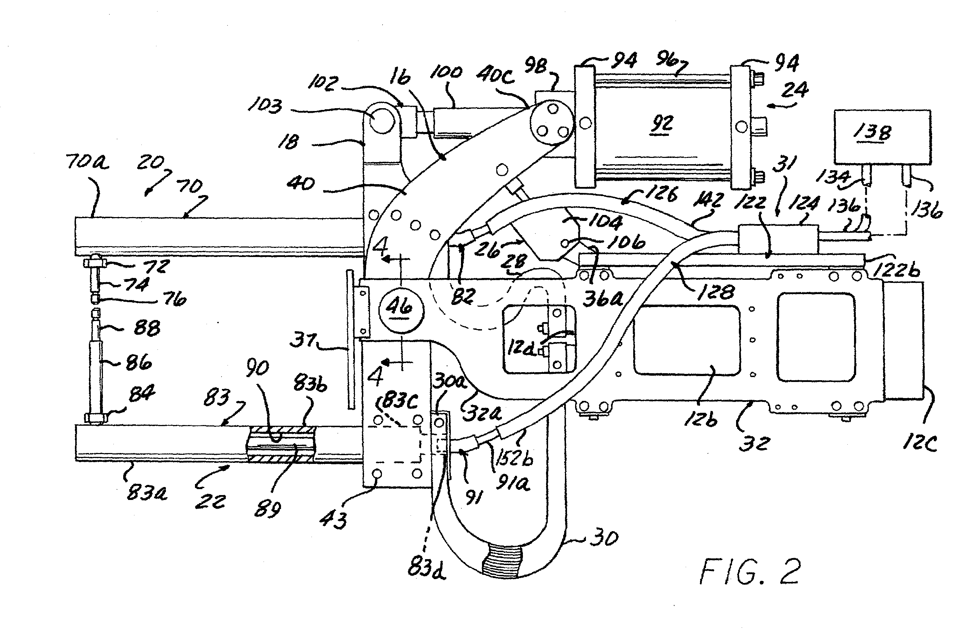

Lower electrode assembly 22 (Figures 1 and 2) includes an electrode 83, a hex adapter 84 connected to the free front end 83a of electrode 83, a cap adapter 86, an electrode cap or weld tip 88 connected to cap adapter 86, and a central coolant tube 89 positioned concentrically in a central axial passage 83b in electrode 83. Coolant tube 89 coacts with passage 83b to define concentric axially extending coolant fluid passages including a central inner passage defined within tube 89 and an annular outer passage 90 defined between passage 83b and tube 89. It will be understood that, in known manner, the concentric coolant fluid passages extend through hex adapter 84 and cap adapter 86 whereby to deliver coolant fluid to weld tip 88 and return coolant fluid from the tip. For example, coolant fluid may be delivered via inner tube 89 and return flow may be provided via an annular outer passage 90. The rear end 83c of electrode 83 is clampingly received in an aperture 42a in holder 42 with a split 42b in the lower end of the holder coacting with fasteners 43 to effect the clamping action. An angled fitting 91 is threadably received in a reduced diameter rear portion 83 d of electrode 83.

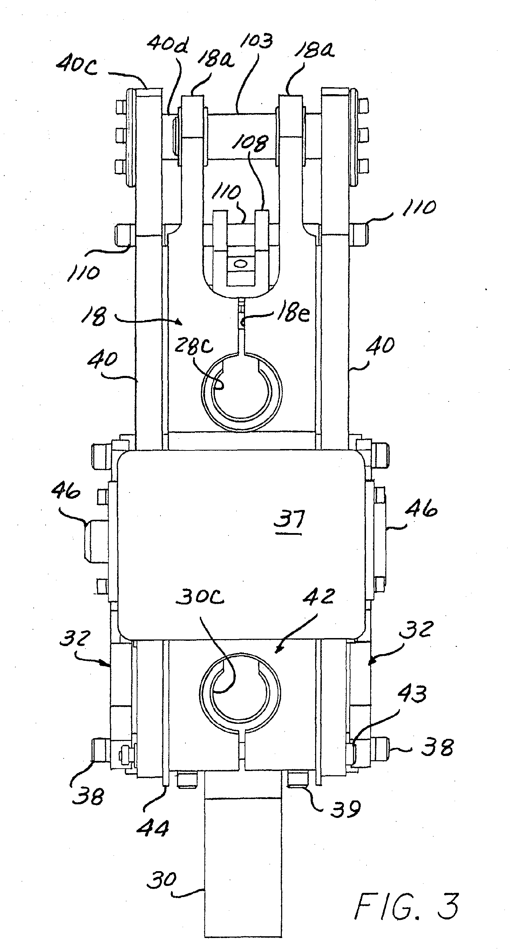

Power cylinder assembly 24 (Figures 1, 2 and 16) includes a cylinder main body 92 clampingly positioned between end plates 94 via tie rods 96, a mounting block 98 provided on the front face of front end plate 94, a piston rod 100 connected in known manner with a piston received within the cylinder body 92, and a cylinder rod end 102. The front end 100a of piston rod 100 is clampingly received in a bore 102a in the rear face of cylinder rod end 102 and a bore 102b in the forward end of rod end 102 receives a pivot pin 103 passing through apertures 18f in spaced clevis upper arm portions 18a of inner arm 18 to pivotally mount the front end of the piston rod to the upper end of the inner arm 18. Power cylinder assembly 24 may for example comprise a hydraulic cylinder assembly. The upper ends 40c of outer arms 40 define trunnions 40d (Figures 3 and 5) which are journaled in suitable sockets in cylinder mounting block 98 to pivotally connect the upper ends of arms 40 to the power cylinder assembly 24.

Balancing cylinder assembly 26 (Figures 1,2,3 and 5) may comprise, for example, an air cylinder and includes a cylinder body 104 pivotally mounted by a pin 106 on a bracket portion 36a of cage cross bar 36, a piston rod 106 suitably connected to the piston within cylinder 104, and a clevis 108 fixedly secured t the upper free end of a piston rod 106 and carrying a cross rod 110 jounaled at its opposite ends in suitable apertures in spaced arms 40 whereby to pivotally mount the upper end of piston rod 106 with respect to arms 40.

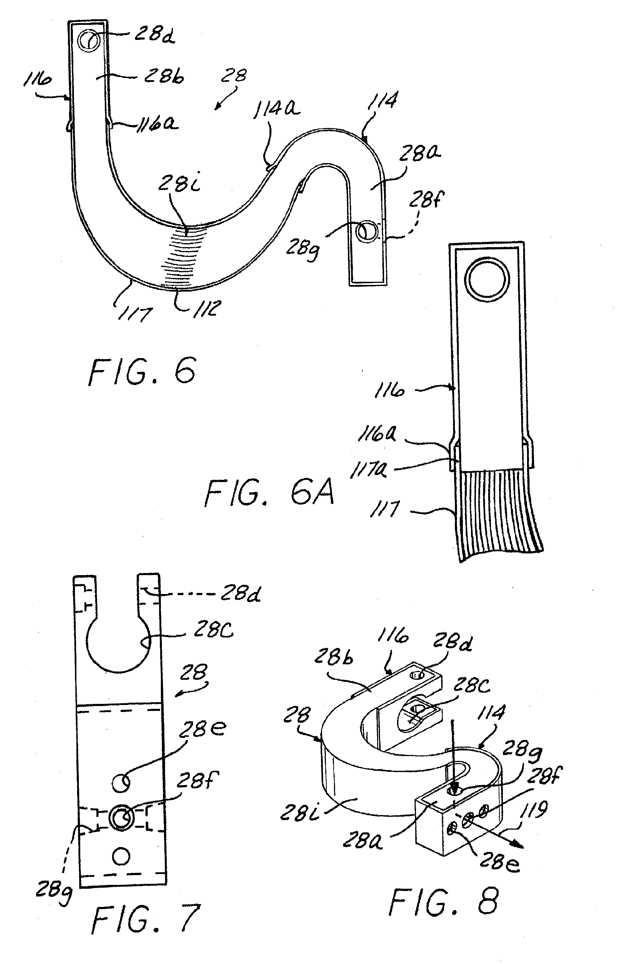

Upper shunt 28 (Figures 1, 2, 5, 6, 6a, 7, 8, 17 and 18) has a serpentine or "S" configuration and has a laminated copper construction whereby to provide a flexible electrical interconnection between the transformer and upper electrode assembly 20. Shunt 28 is formed of a plurality (for example 95) of elongated strips of copper 112 which are suitably fixedly secured together at their opposite ends 28a and 28b but are unsecured intermediate the unified ends so that they are free to flex between the unified ends. Shunt 28 is produced by arranging the copper strips in a stacked configuration, positioning U-shaped copper clips 114 and 116 over the opposite ends 28a and 28b of the stacked copper strips, and electrically welding the end portions 28a and 28b with the clips in place to form fused together, solid unified end portions 28a and 28b. Care is taken during the welding operation to ensure that the intermediate shunt portion 28i between the unified ends is not welded so that the intermediate portion is free to flex. Care is also taken to ensure that the extreme inboard portions 114a/116a of the clips 114/116 are not welded to the copper strips so that, following the welding operation, the outboard ends 117a of insulative fabric strips 117 may be positioned under the inboard ends 114a/116a of the clips and the inboard ends 114a/116a of the clips may be crimped to fixedly clamp the outboard ends of 117a of the insulative strips under the inboard ends of the clips. The fabric strips 117 are positioned loosely above and below the copper strips in a sandwich configuration and serve to protect the copper strips and preclude inadvertent electrical contact between the copper strips and other elements of the weld gun. Following the crimping of the fabric strips 117, unified end 28a is subjected to a bending operation to import a curvilinear configuration to the end portion. The particular curvilinear configuration imparted to the end portion 28a may allow the end portion to assume a "hook" configuration. Shunt end 28b is machined to provide a clevis configuration and defines a partially circular opening 28c adapted to be clampingly secured to the reduced diameter portion 70c of electrode 70 utilizing suitable clamping bolts passing through bores 28d. Shunt end 28a is provided with suitable bolt apertures 28e to fixedly secure the shunt end to the front face 12d of the transformer and is further provided with a coolant passage 28f communicating with a cross bore 28g. Passage 28f in turn communicates with an inlet/outlet end 13a of transformer coolant passage system 13 whereby to facilitate the delivery of a suitable cooling fluid to the transformer coolant system via cross-bore 28g and passage 28f. It will be understood that clips 114 and 116 are suitably formed and apertured to conform to and accommodate the form and apertures of the corresponding ends of the shunt.

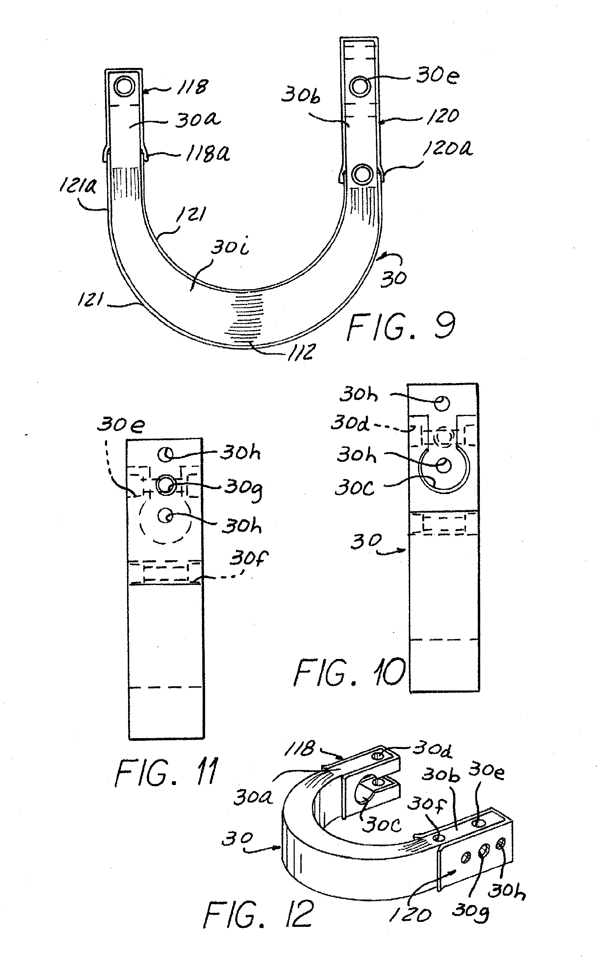

Lower shunt 30 (Figures 1, 2, 5, 9, 10, 11, 12 and 18) has a generally U-shaped configuration and is formed of a plurality (for example 95) of elongated copper strips 112 which are suitably fixedly secured together at their opposite ends 30a and 30b but are unsecured intermediate the unified ends so they are free to flex between the unified ends. Shunt 30 is produced by arranging the copper strips in a stacked configuration, positioning U-shaped copper clips 118 and 120 over the opposite ends 30a and 30b of the stacked copper strips, and electrically welding the end portions 30a and 30b, with the clips in place, to form fused together solid unified end portions 30a and 30b. Care is taken to insure that the intermediate shunt portion 30i between the unified ends is not welded so that the intermediate portion is free to flex. Care is also taken to insure that the extreme inboard end portions 118a, 120a of the clips 118, 120 are not welded to the copper strips so that, following the welding operation, the outboard ends 121 a of insulative fabric strips 121 may be positioned under the inboard ends 118a, 120a of the clips and the inboard ends of the clips may be crimped to fixedly clamp the outboard ends 121a of the insulative strips under the inboard ends of the clips. The fabric strips 121 are positioned loosely above and below the copper strips in a sandwich configuration and serve to protect the copper strips and preclude inadvertent electrical contact between the copper strips and other elements of the weld gun. Unified end 30a is machined to provide a clevis configuration defining a partially circular opening 30c whereby to facilitate the clamping engagement of the end 30a to the reduced diameter portion 83d of electrode 83 utilizing a clamping bolt passing through bores 30d. End 30b is provided with a pair of vertically spaced cross-bores 30e and 30 f. Upper cross-bore 30e communicates with a coolant passage 30g. End 30b is secured to the front face 12d of the transformer immediately below the end 28a of the upper shunt utilizing suitable fasteners passing through apertures 30h. Thus positioned, cooling passage 30g communicates with an inlet/outlet end 13b of transformer coolant passage system 13 so that a cooling fluid may be circulated through bore 28g of the upper shunt, through passage 28f to coolant system inlet/outlet 13a, routed in cooling fashion around the transformer through coolant system 13, returned via inlet/outlet 13b to passage 30g of lower shunt 30, and discharged through cross bore 30e of the lower shunt, whereby to provide a continuous flow of cooling fluid to and through the transformer and to the electrical interfaces between the shunts and the transformer. If desired or required, further cooling fluid flow may be provided through cross bore 30f communicating with passage 30g. It will be understood that clips 118 and 120 are suitably formed and apertured to conform to and accommodate the form and apertures of the corresponding ends of shunt 30. A suitable coolant fitting 123 (Figure 5) may be provided to communicate with cross-bore 30e and a suitable coolant fitting (not shown) may be provided to communicate with cross-bore 28g.

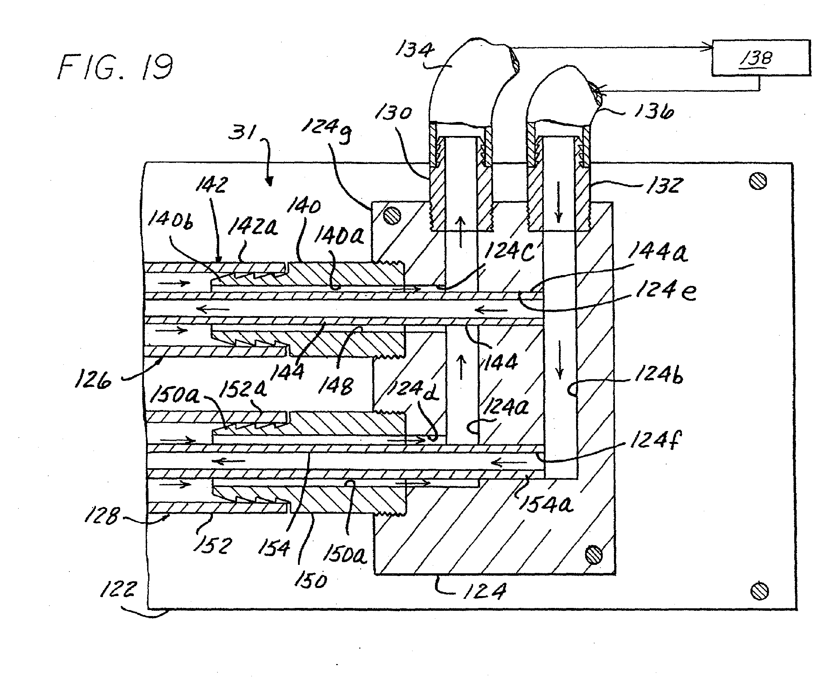

Coolant distributor assembly 31 (Figures 1, 2, 17 and 19) includes a mounting plate 122, a distributor block 124, and concentric tubing assemblies 126 and 128.

Mounting plate 122 has a rectangular configuration and is sized to be fixedly mounted via suitable fastener devices on top of cradle 14 in overlying relation to transformer 12. The plate may extend for example from the rear top cross bar 34 to the front top cross bar 36 and may provide a notch 122a to accommodate the bracket portion 36a of cage cross bar 36.

Distributor block 124 has a monolithic configuration and is mounted on the top face of mounting plate 122 proximate the rear edge 122b of the plate. Block 124 defines parallel transverse bores 124a and 124b, parallel axial bores 124c and 124d, and further parallel axial bores 124e and 124f in respective axial alignment with bores 124c and 124d.

Threaded fittings 130 and 132 communicate with one end of transverse passages 124a and 124b respectively and receive hoses 134 and 136 which extend to suitable inlet and outlet ports of a source 138 of cooling liquid. This arrangement allows cooling liquid to be supplied for example from source 138 to passage 124b and returned to the source 138 via passage 124a.

Concentric tubing assembly 126 includes a fitting 140, a hose 142 and a central tube 144.

Fitting 140 is threadably received in a front face 124g of block 124 with its inner diameter 140a coextensive with bore 124c. Hose 142 is received at one end 142a over the barbed end 140b of fitting 140 and extends forwardly to a front end 142b which is fitted over the barbed, angled end 82a of fitting 82. Central tube 144 is press fit at a rear end 144a thereof in passage 144e and extends forwardly across passage 124a, through passage 124c, and through the central passage of the fitting 140 whereafter it extends forwardly and concentrically within and through hose 142 to its forward end 144b which is fitted concentrically within fitting 82 and which connects telescopically at the extreme forward end 144c thereof with the rear end 80a of tube 80. Tube 144 is spaced radially from fitting 82 to define an annular passage 118 between the tube and the fitting and is spaced radially from fitting 140 to define an annular passage 148 between the tube and the fitting.

It will seen that a coolant flow passage is thereby established between coolant liquid source 138 and welding tip 76 via hose 136, fitting 132, passage 124b, tube 144 and tube 80 and that a continuous return flow passage is established between weld tip 76 and source 10 via annular passage 81, annular passage 146, the annular space between hose 142 and tube 144, annular passage 148, passage 124c, passage 124a, fitting 130 and hose 134.

Concentric tubing assembly 128 includes a fitting 150, a hose 152, and a central inner tube 154.

Fitting 150 is threadably received in the front face 124g of distributor block 124 with the inner diameter 150a of the fitting coextensive with passage 124d; one end 152a of hose 152 is fitted over the barbed end 150a of fitting 150; the other end 152b of the hose is fitted (Figure 2) over the barbed end 91 a of angle fitting 91; and the rear end 154a of tube 154 is press fit in passage 124f and extends forwardly across passage 124a, through passage 124d, through fitting 150, and concentrically within hose 152 to a front end (not shown) which is telescopically coupled to the rear end of tube 89. As with the tubing assembly 126, central tube 154 is spaced radially throughout its length from the surrounding hardware so as to define a continuous annular passage between weld tip 88 and source 138 and define a continuous central passage between source 138 and weld tip 88 whereby to allow the provision of recirculating flow of coolant fluid from the source to the weld tip. As with the concentric tubing assembly 126, the flow from the source 138 to the weld tip 88 may be through passage 124b, central tube 154, and central tube 89, and the return flow may be via the annular passageways defined around central tube 89 and central tube 154 and finally via passage 124a and hose 134 to source 138.

In a typical operation of the invention welding gun, the gun is attached to a robot (for example by attaching the robot to the cage 14); gross adjustment of the overall welding gun is performed utilizing the robot; and the upper and lower electrode caps are moved against opposite faces of a workpiece to be welded by simultaneous actuation of power cylinder 24 and air cylinder 26.

The weld gun of the invention provides many important advantages as compared to prior art weld guns. Specifically, the use of a shunt incorporating built in cooling passages for delivery of coolant to the transformer simplifies the construction of the gun and reduces the cost of the gun; the use of a shunt having a unified end portion bent into a curvilinear configuration facilitates the compact and relaxed routing of the shunt; the use of an electrically insulated ball bearing at the central pivot of the gun provides a more robust construction as compared to prior art sleeve bushing constructions while yet providing the required electrical insulation between the electrodes and the main frame of the gun; the gun design allows the ready interchange of the power cylinder with a servo motor of known configuration; the use of a distributor block at a location remote from the electrodes in combination with concentric tubing extending from the distributor block in the electrodes minimizes the volume of tubing required to provide the cooling function and thereby simplifies the gun both structurally and operationally; the use of identical side plates to establish all of the critical dimensions of the components of the gun insures that tolerances will be maintained on all of the critical dimensions and at all of the critical point; and the use of identical side plates further simplifies reconfiguration of the gun since the shape and the configuration of the side plates may be changed to accommodate a different welding requirement while continuing to utilize much of the same componentry of the welding gun in the new configuration.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A weld gun including a frame structure, a weld arm mounted on the frame structure, an electrode mounted on the weld arm and including an electrode cap at one end of the electrode, a transformer, and a shunt secured at opposite ends thereof to another end of the electrode and to the transformer, **characterized in that**:
the shunt is formed of a plurality of stacked, elongated flexible strips of an electrically conductive material;
the strips are fixedly secured at their opposite end portions to form unified shunt end portions but are unsecured intermediate the unified end portions to form a flexible intermediate portion between the unified shunt end portions;
at least one of the unified end portions of the shunt is bent into a curvilinear configuration; and
the flexible intermediate portion extends in curvilinear fashion between the unified end portions.

2. A weld gun according to claim 1 wherein the bent unified end portion is secured to the transformer.

3. A weld gun according to claim 2 wherein the bent unified end portion, the flexible intermediate portion, and the other unified end portion coact to define an "S" configuration.

4. A weld gun according to claim 1 wherein:
the intermediate shunt portion presents a "U" configuration between the unified end portions.

5. A weld gun according to claim 1 wherein the shunt is further formed from a clip positioned over each unified end portion of the shunt prior to the bending operation and strips of insulative material positioned loosely above and below the intermediate portion in sandwich fashion and crimped at outboard ends thereof beneath inboard ends of the clips.

6. A weld gun according to claim 1 wherein:
the weld arm comprises a first weld arm;
the electrode comprises a first electrode;
the shunt comprises a first shunt;
the weld gun further includes a second weld arm mounted on the frame structure, a second electrode mounted on the second weld arm and including an electrode cap at one end of the second electrode, and a second shunt secured at one end thereof to another end of the second electrode and secured at another end thereof to the transformer;
the second shunt is formed of a plurality of stacked elongated strips of electrically conductive material;
the strips of the second shunt are fixedly secured together at their opposite end portions to form rigid unified end portions but are unsecured intermediate the unified end portions to form a flexible intermediate portion between the unified end portions; and
one unified end portion of the second shunt is fixedly secured to the other end of the second electrode, the other unified end portion of the second shunt is fixedly secured to the transformer, and the flexible intermediate portion of the second shunt extends in curvilinear fashion between the unified end portions of the second shunt.

7. A weld gun according to claim 6 wherein:
the bent unified end portion of the first shunt is secured to the transformer.

8. A weld gun according to claim 7 wherein:
the bent unified end portion of the first shunt, the flexible intermediate portion of the first shunt, and the other unified end portion of the first shunt coact to define an "S" configuration.

9. A weld gun according to claim 6 wherein:
the first shunt presents an "S" configuration; and
the intermediate portion of the second shunt presents a "U" configuration between the unified end portions.

10. A shunt for use with a weld gun including a frame structure, a weld arm mounted on the frame structure, an electrode mounted on the weld arm and including an electrode cap at one end of the electrode, a transformer, and a shunt secured at one end thereof to another end of the electrode and secured at another end thereof to the transformer, **characterized in that**:
the shunt is formed of a plurality of stacked elongated flexible strips of an electrically conductive material, the strips are fixedly secured at their opposite end portions to form rigid unified shunt end portions but are unsecured intermediate the unified end portions to form a flexible intermediate portion between the unified shunt end portions; and
one of the unified end portions is bent into a curvilinear configuration whereby one unified end portion of the shunt may be fixedly secured to the other electrode end, the other unified end portion of the shunt may be fixedly secured to the transformer, and the flexible intermediate portion may extend in curvilinear fashion between the unified end portions.

11. A shunt according to claim 10 wherein:
each of the unified end portions includes aperture means to facilitate securement of the shunt to the electrode and the transformer, respectively; and
the unified end portion for securement to the transformer further includes a coolant passage for communication with a coolant passage system in the transformer to allow the delivery of a cooling fluid to the transformer coolant passage system through the unified end portion.

12. First and second shunts for use with a weld gun including a frame structure, first and second electrodes mounted on the frame structure and each including an electrode end cap at one end of the electrode, a transformer, a first shunt secured at one end thereof to another end of the first electrode and secured at another end thereof to the transformer and a second shunt secured at one end thereof to another end of the second electrode and secured at another end thereof to the transformer, **characterized in that**:
each shunt is formed of a plurality of stacked elongated flexible strips of an electrically conductive material;
the strips of each shunt are fixedly secured at their opposite end portions to form rigid, unified, shunt end portions but are unsecured intermediate the unified end portions to form a flexible intermediate portion between the unified shunt end portions; and
one unified end portion of one of the shunts is bent into a curvilinear configuration.

13. First and second shunts according to claim 12 wherein:
each of the unified end portions of each of the shunts includes aperture means to facilitate securement to the respective electrode and to the transformer; and
the unified end portion of each shunt for securement to the transformer further includes a coolant passage for communication with a coolant passage system in the transformer to allow the delivery a cooling fluid to the transformer coolant passage system through a unified end portion of the first shunt and allow the discharge of the cooling fluid from the transformer coolant passage system through a unified end portion of the second shunt.

14. A weld gun according to claim 1 wherein the formation of the unified end portions is performed as an electric welding operation serving to fuse the end portions of the stacked strips together.

15. A method of forming a shunt for use with a weld gun, including an electrode and a transformer, the shunt adapted to extend between the electrode and the electrode and the transformer, the method comprising;
positioning a plurality of flexible strips of an electrically conductive material in a stacked configuration;
fixedly securing the opposite end portions of the strips together to form unified shunt end portions while maintaining the strips intermediate the unified end portions in an unsecured relation to form a flexible intermediate portion between the unified shunt end portions; and
bending at least one of the unified end portions into a curvilinear configuration.

16. A method according to claim 15 wherein the formation of the unified end portions is performed as an electric welding operation.

17. A method according to claim 16 wherein a clip is positioned over each unified end portion of the shunt prior to the bending operation and strips of insulative material are positioned loosely above and below the intermediate portion in sandwich fashion and crimped at outboard ends thereof beneath inboard ends of the clips.
